# FASCICULE DE BREVET EUROPEEN

(11) **EP 2 384 352 B1**
(45) Date de publication et mention de la délivrance du brevet: **14.11.2012**
(21) Numéro de dépôt: 10707609.3
(22) Date de dépôt: 28.01.2010
(51) Int. Cl.: C08L 23/06, C08L 23/08, C09J 123/06, C09J 123/08

(54) **COMPOSITION ADHESIVE A BASE DE POLYETHYLENE GREFFE**
KLEBSTOFFZUSAMMENSETZUNG, ENTHALTEND GEPFROPFTES POLYETHYLEN
ADHESIVE COMPOSITION CONTAINING GRAFTED POLYETHYLENE

(30) Priorité: 30.01.2009 FR 0950569
(43) Date de publication de la demande: 09.11.2011
(73) Titulaire: Arkema France, 92700 Colombes (FR)
(72) Inventeur: GERBAULET, Arnaud, F-25160 OYE ET PALLET (FR); DEVISME, Samuel, F-76000 Rouen (FR); QUILLET, Laurent, F-27500 Pont-Audemer (FR)
(74) Mandataire: Gavin, Pablo
(86) Numéro de dépôt international: PCT/FR2010/050136
(87) Numéro de publication internationale: WO 2010/086559

(56) Documents cités:
- WO-A1-94/11435
- WO-A1-97/27259
- WO-A1-99/37730
- GB-A- 2 116 187
- US-A- 4 684 576

## Description

### Domaine de l'invention

La présente invention a pour objet une composition adhésive comprenant du polyéthylène greffé.

Cette composition permet la fabrication de structures multicouches qui peuvent être utilisées comme structures protectrices de tubes, ces tubes pouvant être utilisés par exemple pour la fabrication d'oléoducs ou de gazoducs.

### Etat de l'art

Le développement de la demande énergétique mondiale nécessite la construction de nouveaux oléoducs et de gazoducs afin de permettre le transit du pétrole et du gaz des pays producteurs vers les pays consommateurs. Ces oléoducs et gazoducs sont fabriqués à partir de tubes métalliques connectés entre eux. Ces tubes métalliques sont généralement protégés de l'environnement extérieur par des revêtements afin d'empêcher leur corrosion, par exemple par un revêtement en polyoléfine (généralement en polypropylène ou en polyéthylène). Comme les polyoléfines n'adhèrent pas au métal, on utilise généralement des couches intermédiaires qui permettent l'application du revêtement en polyoléfine. Par exemple, on peut utiliser des couches intermédiaires de résine époxy et de composition adhésive à base de polyoléfine, également appelée « liant » dans la présente description.

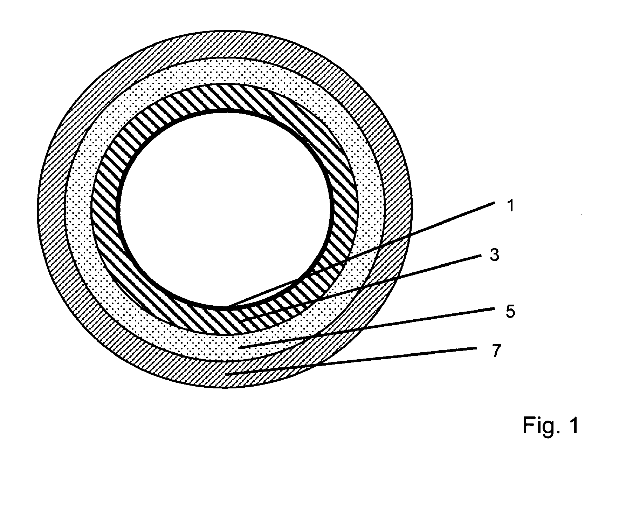

Sur la Figure 1, on a représenté un exemple de tube métallique creux (1) recouvert d'une structure multicouche protectrice. Sur cette Figure, cette structure protectrice est composée de la manière suivante en partant de la surface métallique du tube, une couche de résine époxy (3), une couche de liant (5) et une couche de polyoléfine (7).

Pour que ces structures puissent être utilisées pour la construction d'oléoducs ou de gazoducs, il est nécessaire qu'elles soient homologuées dans chacun des pays où elles doivent être utilisées. Généralement, l'homologation consiste en une mesure de l'adhérence entre la couche de revêtement en polyoléfine et la couche de la résine époxy, cette adhérence étant conférée par la présence de liant entre les deux couches. Les conditions de cette homologation peuvent être différentes pour chaque pays. Selon les pays, les deux couches doivent adhérer à température ambiante et/ou à haute température, c'est-à-dire 80°C. Il est donc nécessaire de fabriquer des liants qui adhèrent aussi bien à température ambiante qu'à haute température, afin de pouvoir les utiliser dans tous les pays, quel que soit le protocole d'homologation.

Des compositions de liant ont déjà été décrites dans l'art antérieur. Par exemple, il est décrit dans le document WO2006125913 un liant comprenant un mélange d'un polyéthylène (PE) ayant une densité comprise entre 0,94 et 0,98 avec un polypropylène, ledit mélange étant co-greffé par un monomère fonctionnel insaturé et pouvant être dilué dans un polyéthylène non greffé ayant une densité comprise entre 0,94 et 0,98. Ce liant est utilisé pour la fabrication de tubes dans la construction d'oléoducs.

Ce liant présente une bonne adhérence à température ambiante jusqu'à 80°C.

Pour mesurer cette adhérence, dans une première étape, on découpe après formation du tube une languette à l'aide d'un couteau ou d'un burin : ceci constitue l'étape d'« amorçage ». Cette languette est découpée au niveau du liant, entre les couches de résine époxy et de polyoléfine. Dans une seconde étape, on mesure la force d'adhérence en fixant un mors sur la languette formée lors de la première étape : en tirant sur la languette on mesure la force de pelage. En plus d'une bonne adhérence, il est donc nécessaire que l'étape d'amorçage de la languette soit facile. Pour les liants dont l'amorçage n'est pas possible à température ambiante, il est nécessaire de le réaliser après chauffage du tube. Ce chauffage constitue une étape supplémentaire de manipulation. De plus, les protocoles d'homologations dans certains pays interdisent un tel chauffage, ce qui empêche donc l'utilisation de ces liants dans ces pays. Or, l'amorçage n'est pas facile voire impossible à température ambiante avec le liant décrit dans ce document.

Une autre composition de liant est divulguée dans le document EP1043375, ce liant comprenant un mélange d'un polyéthylène ayant une densité comprise entre 0,935 et 0,980 avec un polymère choisi parmi les élastomères, les polyéthylènes de très basse densité, ledit mélange étant co-greffé par un acide carboxylique insaturé et dilué dans un polyéthylène de densité comprise entre 0,93 et 0,95. Ce liant peut être utilisé pour former une structure multicouche par exemple dans les emballages souples ou les réservoirs essence et ne concerne pas les tubes métalliques utilisés pour la fabrication d'oléoduc.

Il existe également des compositions à base de polyéthylène obtenu par catalyse métallocène greffé. Ces compositions présentent des propriétés adhésives améliorées par rapport aux polyéthylènes greffés obtenus par polymérisation radicalaire ou par catalyse de type Ziegler-Natta, ceux-ci étant regroupés ici sous la dénomination « non-métallocène ». Les polyéthylènes obtenus par catalyse métallocène, qui sont généralement des polymères d'éthylène comprenant des comonomères alpha-oléfine, présentent une distribution de poids moléculaire plus étroite que les polyéthylènes non-métallocène. Par ailleurs, la répartition des comonomères alpha-oléfine à l'intérieur de la chaîne polyéthylène métallocène est plus uniforme que dans les différentes chaînes polyéthylène non-métallocène. Enfin, les différentes chaînes de polyéthylène métallocène comprennent moins de longues chaînes branchées que les chaînes de polyéthylène non-métallocène. Ces propriétés intrinsèques conduisent à des propriétés physico-chimique des polyéthylènes métallocène, par exemple de fluidité à l'état fondu, différentes de celles des polyéthylènes non-métallocène.

Parmi les documents décrivant une composition adhésive à base de polyéthylène métallocène greffé, on peut citer comme exemple le document WO 97/27259 dans lequel est décrite une composition adhésive comprenant un polyéthylène non métallocène, de 5 à 35% en poids de la composition d'un polyéthylène métallocène particulier greffé et éventuellement jusqu'à 30% en poids d'un élastomère hydrocarboné. Cependant, ce document ne décrit pas une composition adhésive restant efficace à haute température et qui permet un amorçage aisé à température ambiante tel que décrit précédemment. Une autre composition adhésive est également décrite dans le document WO 99/37730, cette composition comprenant un copolymère d'éthylène et d'un monomère éthylénique portant une fonction polaire de type ester, de 5 à 35% en poids de la composition d'un polyéthylène métallocène particulier greffé et éventuellement jusqu'à 30% en poids d'un élastomère hydrocarboné. Ces formulations adhésives comprennent ainsi au moins 65% en poids de copolymère d'éthylène et d'un monomère éthylénique portant une fonction polaire de type ester et d'élastomère ; elles présentent une faible adhésivité à haute température, ce qui les empêche de pouvoir être utilisées lorsque les homologations demandant une adhésion à haute température.

Il existe donc encore aujourd'hui un besoin de trouver de nouvelles compositions de liant permettant la fabrication de structures multicouches utiles pour la construction d'oléoducs ou de gazoducs. Plus particulièrement, il est nécessaire que ces liants permettent d'obtenir une bonne adhérence avec les couches qui lui sont directement liées à température ambiante ainsi qu'à haute température, et que l'amorçage pour la mesure de cette adhérence soit aisé à température ambiante.

### Résumé de l'invention

L'invention porte justement sur une nouvelle composition, à base de polyéthylène (B) non greffé obtenu par catalyse métallocène, permettant de remédier aux inconvénients présentés ci-dessus. Cette composition comprend par rapport à sa masse totale :
- de 1 à 40% d'un polyéthylène (A) greffé par un monomère fonctionnel insaturé ou un mélange d'un polyéthylène (A1) avec un second polymère (A2) différent de (A1), ce mélange de (A1) et (A2) étant cogreffé par un monomère fonctionnel insaturé, la teneur en masse de monomère fonctionnel par rapport à (A) étant comprise dans la gamme allant de 30 à 100000 ppm ;
- de 25 à 98% d'un polyéthylène (B) non greffé obtenu par catalyse métallocène ayant une densité allant de 0,900 à 0,965 ;
- de 1 à 35% d'un produit élastomérique (C).

Cette nouvelle composition présente une bonne adhérence à température ambiante ou à haute température (par exemple 80°C) avec de nombreux supports, par exemple des supports en polyéthylène ou en résine époxy. On considère généralement que l'adhérence à température ambiante est bonne lorsque la force de pelage est au moins supérieure à 250N/cm selon la norme NF A 49-710. On considère généralement que l'adhérence à 80°C est bonne lorsque la force de pelage est au moins supérieure à 100N/cm (NF A 49-710). La composition peut être utilisée dans tout type de structure multicouche. Une utilisation préférentielle de cette composition est dans le revêtement de tuyaux (pipe coating) intégrant des structures comprenant une couche de polyéthylène. La présente invention est particulièrement utile pour les surfaces métalliques revêtues de polyéthylène (PE). La demanderesse a découvert que ce liant permet la formation de structures multicouches présentant d'excellentes propriétés d'adhérence entre les différentes couches, tout en présentant un coût de fabrication peu élevé. L'amorçage de la structure est aisé, en particulier pour les structures de type résine époxy/liant/revêtement en PE. Différents modes préférés de réalisation de l'invention sont décrits ci-dessous ; il est précisé que ces différents modes peuvent être combinés entre eux.

Avantageusement, la composition selon l'invention comprend, par rapport à sa masse totale, de 10 à 30% en masse du polyéthylène greffé ou du mélange cogreffé (A), de 40 à 80% du polyéthylène non greffé (B) et de 10 à 30% en masse du produit élastomérique (C).

La densité du polyéthylène (B) peut être avantageusement supérieure ou égale à 0,925, par exemple comprise entre 0,930 et 0,960.

De manière préférée, le polyéthylène (B) comprend au moins 95% en moles d'éthylène.

Préférentiellement, le monomère fonctionnel greffé sur le polyéthylène ou sur le mélange co-greffé (A) est un acide carboxylique insaturé ou un anhydride insaturé de cet acide.

Dans le cas où le polymère (A) est un mélange co-greffé, il comprend préférentiellement de 90 à 20 parties de polyéthylène (A1) et de 10 à 80 parties de polymère (A2).

Le polymère (A2) est avantageusement une polyoléfine. Cette polyoléfine est, de manière préférée, choisie parmi les homopolymères et les copolymères de l'éthylène et/ou du propylène. Tout préférentiellement, la polyoléfine (A2) est un homopolymère ou un copolymère de l'éthylène et d'alpha-oléfine différent de (A1).

Selon un mode de réalisation, le polymère (A) est un mélange cogreffé de d'un polyéthylène métallocène (A1) et un polyéthylène basse densité linéaire (A2) non métallocène.

Préférentiellement, la densité de (A1) est comprise dans la gamme allant de 0,860 à 0,96 g/cm³. Préférentiellement, la densité de (A2) est comprise dans la gamme allant de 0,9 à 0,94 g/cm³.

De manière préférée, le produit élastomérique (C) a un module de flexion inférieur à 100MPa, ce module étant mesuré selon la norme ISO 178 : 2001.

Selon une première version de l'invention, le produit élastomérique (C) est choisi parmi les copolymères éthylène-(méth)acrylate d'alkyle ou terpolymères éthylène (méth)acrylates d'alkyle-anhydride maléique.

Selon une seconde version de l'invention, le produit élastomérique (C) est un copolymère de l'éthylène avec une alpha-oléfine dont la densité est dans la gamme allant de 0,860 à 0,900, tels que les copolymères d'éthylène et de propylène comme par exemple les caoutchoucs éthylène-propylène comprenant un diène (EPDM), les caoutchoucs éthylène-propylène ne comprenant pas de diène (EPR) ou les polyéthylènes très basse densité (PETBD).

Selon une version préférée de l'invention, la composition comprend :
- de 10 à 30% en masse du mélange cogreffé (A) d'un polyéthylène obtenu par catalyse métallocène (A1) avec un polyéthylène obtenu par catalyse Ziegler-Natta (A2), ce mélange de (A1) et (A2) étant cogreffé par de l'anhydride maléïque, la teneur en masse de monomère fonctionnel par rapport à (A) étant comprise dans la gamme allant de 30 à 100000 ppm ;
- de 40 à 80% du polyéthylène métallocène non greffé (B) ayant une densité allant de 0,900 à 0,965 ;
- et de 10 à 30% en masse d'un copolymère éthylène-(méth)acrylate d'alkyle (C).

Un autre objet de l'invention est un film de la composition selon l'invention.

L'invention porte également sur une structure multicouche comprenant au moins une couche de composition selon l'invention sur au moins une autre couche dite « couche support ».

Selon une première variante de structure selon l'invention, la couche support comprend une polyoléfine, cette polyoléfine étant préférentiellement un polyéthylène.

Selon une seconde variante de structure selon l'invention, la couche support comprend une résine époxy.

Une structure préférée de l'invention comprend une couche de la composition, ladite couche étant comprise entre une première couche support comprenant une résine époxy et une seconde couche support comprenant du polyéthylène.

L'invention porte également sur l'utilisation de la composition ou d'une structure selon l'invention dans des tubes, en particulier pour la protection à la corrosion de tubes métalliques.

L'invention a également pour objet un tube recouvert par la structure selon l'invention. Ce tube est de préférence métallique. De manière toute préférée, le tube est recouvert d'une structure multicouche protectrice comprenant une résine époxy, une couche de liant selon l'invention et une couche de revêtement en polyoléfine, lesdites couches allant de l'intérieur vers l'extérieur du tube.

Le tube selon l'invention peut être avantageusement utilisé pour transporter des gaz ou des liquides, tout particulièrement des produits pétroliers ou des gaz.

D'autres avantages apparaîtront à la lecture de la description qui suit.

### Description de la Figure annexée

La description qui va suivre est donnée uniquement à titre illustratif et non limitatif en référence à la figure annexée, dans laquelle la Figure 1, déjà décrite, est une vue de coupe représentant un exemple de tube (1) recouvert d'une structure protectrice, cette structure protectrice étant composée successivement d'une couche de résine époxy (3), de liant (5) et de polyoléfine (7).

### Description détaillée de l'invention

La composition selon l'invention comprend par rapport à sa masse totale :
- de 1 à 40% d'un polyéthylène (A) greffé par un monomère fonctionnel ou un mélange d'un polyéthylène (A1) avec un second polymère (A2) différent de (A1), ce mélange de (A1) et (A2) étant co-greffé par un monomère fonctionnel, la teneur en masse de monomère fonctionnel par rapport à (A) étant comprise dans la gamme allant de 30 à 100000 ppm ;
- de 25 à 98% d'un polyéthylène (B) non greffé obtenu par catalyse métallocène ayant une densité allant de 0,900 à 0,965 ;
- de 1 à 35% d'un produit élastomérique (C).

Le polyéthylène (PE) (A) ou (A1) peut être un homopolymère de l'éthylène ou un copolymère comprenant au moins 50% en moles d'éthylène et d'une seconde alpha-oléfine. Préférentiellement, le nombre de moles d'éthylène est supérieur à 90%, de manière toute préférée supérieur à 95%.

Dans la présente description, on entend par copolymère un polymère obtenu par copolymérisation d'au moins deux co-monomères différents.

Comme seconde alpha-oléfine capable de copolymériser avec l'éthylène, on peut utiliser avantageusement le 1-butène, le 1-hexène, le 1-octène ou le 1-décène.

La densité du PE (A) ou (A1) mesurée selon la norme ASTM D 1505 peut être de 0,860 à 0,96, avantageusement de 0,900 à 0,940, par exemple de 0,910 à 0,935.

Tout préférentiellement, le polyéthylène (A) ou (A1) est un polyéthylène à basse densité linéaire (PEBDL) : ce polymère se présente sous une forme substantiellement linéaire avec un faible nombre de longues chaînes. Par longue chaîne, on entend une chaîne produite lors de la polymérisation de l'éthylène et non celles éventuellement introduites par la seconde alpha-oléfine ayant co-polymérisé avec l'éthylène. Selon l'invention, on considère que le nombre de longues chaînes est faible lorsque son nombre moyen est inférieur ou égal à 0,01 pour un nombre de 100 atomes de carbone, préférentiellement inférieur ou égal à 0,005.

On peut mesurer ce nombre de chaînes de carbone en utilisant la résonance magnétique nucléaire selon la méthode spectroscopique quantitative décrite par Randall dans Rev. Macromol. Chem. Phys., C29, pages 285-297.

Ce PEBDL peut être obtenu par voie catalytique, en utilisant des catalyseurs de type Phillips, Ziegler-Natta ou métallocène.

Selon un mode de réalisation, le PEBDL est un polyéthylène métallocène. Dans la demande, on désigne par polyéthylène métallocène le PE fabriqué en présence d'un catalyseur mono-site constitué généralement d'un atome d'un métal pouvant être par exemple du zirconium ou du titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IV A, V A, et VI A. Des métaux de la série des lanthanides peuvent aussi être utilisés.

Selon l'invention, le PE (A) ou (A1) peut être un polyéthylène obtenu par catalyse métallocène. Ce polyéthylène obtenu par catalyse métallocène est avantageusement caractérisé par son rapport *M̅w̅lM̅n̅* < 3 et de préférence < 2 dans lequel *M̅w̅* et *M̅n̅* désignent respectivement la masse molaire moyenne en poids et la masse molaire moyenne en nombre. De façon alternative, il peut être aussi avoir un MFR(melt flow ratio ou rapport d'indice de fluidité à l'état fondu MFI) inférieur à 6,53 et un rapport Mw /Mn supérieur à MFR moins 4,63. MFR désigne le rapport du MFI10 (MFI à 190°C sous une charge de 10 Kg) au MFI2 (MFI à 190 °C sous une charge de 2,16 Kg). D'autres polyéthylènes métallocènes sont définis par un MFR égal ou supérieur à 6,13 et un rapport Mw / Mn inférieur ou égal à MFR moins 4,63.

Selon l'invention, le rapport des masses molaires moyennes en poids et en nombre peut être mesuré par exemple par chromatographie par perméation de gel (GPC) en mettant le polymère en solution dans du tétrahydrofurane.

Dans le cas où un mélange d'un polyéthylène (A1) avec un second polymère (A2) est utilisé, (A2) est différent de (A1). Avantageusement, le polymère (A2) est une polyoléfine. La polyoléfine est préférentiellement choisie parmi les homopolymères de l'éthylène ou les copolymères de l'éthylène et d'une autre oléfine, tels que par exemple le 1-butène, le 1-hexène, le 1-octène ou le 1-décène. De manière préférée, le polymère (A2) est un polyéthylène et tout préférentiellement un polyéthylène à basse densité linéaire. Préférentiellement, le PEBDL est obtenu par catalyse Ziegler-Natta.

Les catalyseurs "Ziegler-Natta" sont généralement constitués d'un composé halogéné d'un métal de transition des groupes 4 ou 5, par exemple le titane ou le vanadium, et d'un composé alkylé d'un métal des groupes 2, 12, 13, par exemple le béryllium, le magnésium, le zinc ou l'aluminium. A titre d'exemple, on peut citer la combinaison TiCl₄ avec Al(C₂H₅)₃.

Préférentiellement, le PE (A2) est caractérisé par un rapport *M̅w̅*/*M̅n̅* > 3.

La densité de (A2) peut être comprise dans la gamme allant de 0,9 à 0,94, par exemple de 0,905 à 0,925.

Selon une variante toute préférée de l'invention, (A) est un mélange d'un polyéthylène (A1) obtenu par catalyse métallocène et d'un polyéthylène non métallocène (A2). Selon cette variante, le polyéthylène (A2) est préférentiellement un PEBDL. Le polyéthylène (A2) peut être obtenu par catalyse Ziegler-Natta.

Le polyéthylène (A) ou le mélange de polyéthylène (A1) et de polymère (A2) est (co-)greffé par un monomère fonctionnel insaturé.

Préférentiellement, le monomère fonctionnel insaturé est un monomère choisi parmi :
- les acides carboxyliques insaturés et leurs sels, préférentiellement ceux comprenant de 2 à 30 atomes de carbone, par exemple l'acide acrylique ou l'acide méthacrylique et les sels de ces mêmes acides ;
- les anhydrides d'acide carboxylique, préférentiellement ceux comprenant de 4 à 30 atomes de carbone : ils peuvent être choisis par exemple parmi les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique.

Préférentiellement, on utilise l'anhydride maléique comme monomère fonctionnel insaturé.

La quantité massique de (A) est comprise dans la gamme de 1 à 40% par rapport à la masse totale de la composition, avantageusement entre 5 et 40%, préférentiellement de 10 à 35%, voire de 10 à 30%.

La réaction de greffage peut alors être réalisée selon un procédé batch en solution ou, préférentiellement, selon un procédé continu avec un outil de mélange en fondu qui sont des techniques bien connues de l'homme du métier. Dans le cas d'un procédé de greffage continu, on utilise un outil d'extrusion des matières plastiques à l'état fondu connu de l'homme de l'art. A titre d'exemple, on peut citer les mélangeurs internes, les mélangeurs à cylindre, les extrudeuses monovis, bi-vis contra ou co-rotatives, les co-malaxeurs continus. L'outil de greffage peut être l'un des outils cités ci-dessus ou leur association, comme par exemple un comalaxeur associé à une extrudeuse monovis, une extrudeuse bi-vis corotative associée à une pompe. Dans le cas d'une extrusion, l'outil comprend de préférence une zone de fusion du polymère, une zone de mélange et réaction entre les espèces présentes et une zone de détente/dégazage pour éliminer les composés volatils. L'outil peut être équipé d'un système de filtration et/ou d'un système de granulation à joncs ou sous eau. Le polyéthylène (A) ou le mélange de polyéthylène (A1) et du polymère (A2) est introduit en présence d'un générateur de radicaux et du monomère fonctionnel dans l'outil dont la température du corps est régulée, cette température étant choisie en adéquation avec la cinétique de décomposition du générateur de radicaux. On préfère utiliser comme générateur de radicaux pour le greffage continu les familles des peroxydes de dialkyl, des hydroperoxydes ou des peroxycétals. Préférentiellement, on utilise une température allant de 100 à 300°C, plus préférentiellement de 180 à 250°C.

Le polyéthylène, le monomère de greffage et le générateur de radicaux peuvent être introduit simultanément ou séparément dans l'outil d'extrusion. En particulier, le monomère et/ou le générateur de radicaux peuvent être introduit simultanément avec le polymère en alimentation principale, soit séparément en injection liquide le long de l'outil.

A l'étape d'injection, on peut associer au monomère et/ou au générateur de radicaux une fraction d'un solvant du polymère. Cette fraction de solvant a pour but de faciliter le mélange entre les espèces réactives ainsi que l'élimination des composés volatils lors de l'étape de dégazage.

A l'étape de détente/dégazage, on applique un vide adapté à la dévolatilisation des composés volatils, le niveau de vide pouvant aller quelques millibars à plusieurs centaines.

Le polymère greffé peut être récupéré en sortie de l'outil d'extrusion sous forme de granulé à l'aide d'un outil de granulation.

Dans le polymère modifié par greffage, la quantité du monomère greffé sur le polymère (A) peut être choisie d'une façon appropriée, généralement dans la gamme allant de 30 à 100000 ppm, de préférence de 600 à 50000 ppm, par rapport au poids total du polymère greffé. La quantité du monomère greffé sur le polymère (A) est déterminée par dosage des fonctions succiniques par spectroscopie infrarouge à transformée de Fourrier.

Le polyéthylène (B) non greffé est un polyéthylène ayant une densité comprise dans la gamme allant de 0,900 à 0,965, c'est à dire qu'il peut être un polyéthylène basse densité, un PEBDL, un polyéthylène moyenne densité ou un polyéthylène haute densité. Ce polyéthylène (B) peut être choisi parmi les homopolymères de l'éthylène ou les copolymères de l'éthylène et d'une autre oléfine, tels que par exemple le 1-butène, le 1-hexène, le 1-octène ou le 1-décène. La densité du PE (B) est avantageusement comprise dans la gamme allant entre 0,900 et 0,960. Elle peut être supérieure à 0,925, préférentiellement entre 0,925 et 0,960, par exemple entre 0,930 et 0,940. Le PE (B) est obtenu par catalyse métallocène. Un polyéthylène métallocène peut être avantageusement caractérisé par un rapport *M̅w̅*/*M̅n̅* < 3 et de préférence < 2 dans lequel *M̅w̅* et *M̅n̅* désignent respectivement la masse molaire moyenne en poids et la masse molaire moyenne en nombre. On désigne aussi par polyéthylène métallocène un polyéthylène ayant un MFR (melt flow ratio ou rapport d'indice de fluidité à l'état fondu MFI) inférieur à 6,53 et un rapport Mw / Mn supérieur à MFR moins 4,63. MFR désigne le rapport du MFI₁₀ (MFI à 190°C sous une charge de 10 Kg) au MFI₂ (MFI à 190 °C sous une charge de 2,16 Kg). D'autres polyéthylènes métallocènes sont définis par un MFR égal ou supérieur à 6,13 et un rapport Mw/Mn inférieur ou égal à MFR moins 4,63.

La quantité massique de (B) par rapport à la masse totale de la composition est comprise dans la gamme allant de 25 à 98%, préférentiellement de 40 à 80%.

Avantageusement, le polyéthylène (B) non greffé comprend au moins 90% en moles d'éthylène, préférentiellement au moins 95% en moles d'éthylène.

Le produit élastomérique (C) est différent de (A) et (B).

Le produit élastomérique (C) peut avoir un module de flexion inférieur ou égal à 100MPa, préférentiellement inférieur ou égal à 80MPa, tout préférentiellement inférieur ou égal à 40MPa, ce module étant mesuré selon la norme ISO 178 : 2001. Ce module de flexion peut être également supérieur à 1MPa.

A titre d'exemple de produit élastomérique (C), on peut citer les polymères choisis parmi :
- les copolymères éthylène-alpha-oléfine dont la densité est dans la gamme allant de 0,860 à 0,90 tels que les copolymères éthylène-propylène choisis parmi les EPR (abréviation d'éthylène-propylene-rubber) et les EPDM (abréviation éthylène-propylène-diène EPDM), et les polyéthylènes très basse densité (PETBD) qui sont généralement des copolymères éthylène-butène-1, éthylène-hexène-1, éthylène-octène-1 ;
- les copolymères éthylène-(méth)acrylate d'alkyle ou copolymères éthylène-(méth)acrylates d'alkyle-anhydride maléique ;
- les copolymères éthylène-ester vinylique d'acide carboxylique tel que le copolymère éthylène-acétate de vinyle ;
- les copolymères blocs styrène/éthylène-butène/styrène (SEBS), styrène/butadiène/styrène (SBS), styrène/isoprène/styrène (SIS), styrène/éthylène-propylène/styrène (SEPS) ou les copolymères statistiques styrène-butadiène (SBR) ;
- les polyisoprènes ;
- les polybutadiènes.

La quantité massique de (C) par rapport à la masse totale de la composition est comprise dans la gamme allant de 1 à 35%, préférentiellement de 10 à 30%.

Selon un mode de réalisation, la composition comprend, par rapport sa masse totale, entre 5 et 40% (bornes exclues) en masse du polyéthylène greffé ou du mélange co-greffé (A), de 30 à 75% du polyéthylène non greffé (B) et de 10 à 30% en masse du produit (C).

Selon un autre mode de réalisation, la composition comprend, par rapport sa masse totale, de 10 à 30% en masse du polyéthylène greffé ou du mélange cogreffé (A), de 40 à 80% du polyéthylène non greffé (B) et de 10 à 30% en masse du produit (C). Préférentiellement, la composition comprend, par rapport sa masse totale, de 12 à 25% en masse du polyéthylène greffé ou du mélange cogreffé (A), de 50 à 76% du polyéthylène non greffé (B) et de 12 à 25% en masse du produit (C).

Les compositions selon l'invention peuvent être préparées par les techniques connues de préparation des thermoplastiques, par exemple par malaxage ou extrusion.

Le liant de l'invention peut comprendre de manière éventuelle divers additifs tels que des antioxydants, des absorbeurs d'ultra-violets, des agents antistatiques, des agents de nucléation, des charges, des agents de glissement et des produits ignifuges.

Des exemples d'absorbeurs d'ultra-violets sont la 2,4-dihydroxybenzophénone, le 2-(2'-hydroxy-3',5'-di-t-butylphényl)-5-chlorobenzotriazole, 2-(2-hydroxy-3-t-butyl-5-méthylphényl)-5-chlorobenzotriazole, et le bis(2,2',6,6')-tétraméthyl-4-pipéridine) sébacate.

Des exemples d'anti-oxydants sont le 2,6-di-t-butyl-p-crésol, O-t-butyl-p-crésol, tétrakis-[méthylène-3-(3,5-di-t-butyl-4-hydroxyphényl) propionate]méthane, la p-naphtylamine, et la para-phénylènediamine.

Des exemples d'agents anti-statiques sont la lauryldiéthanolamine, palmityl-diéthanolamine, stéaryl-di-éthanolamine, oléyl-diéthanolamine, béhényl-diéthanolamine, polyoxyéthylène-alkylamines, le stéaryl-monoglycéride, et la 2-hydroxy-4-n-octoxybenzophénone.

Des exemples d'agents de nucléation sont le p-tert-butylbenzoate d'aluminium, dibenzylidène-sorbitol et hydroxy-di-p-t-butylbenzoate d'aluminium.

Des charges utilisables sont par exemple les fibres de verres, fibres de carbone, talc, argile, silice, carbonate de calcium, sulfate de baryum, hydroxyde de magnésium, hydroxyde de calcium et oxyde de calcium.

L'agent de glissement a pour fonction de faciliter la fabrication de la composition, en particulier son extrusion. Des exemples d'agents de glissement sont le stéaramide, l'oléamide, l'érucinamide, le stéarate de calcium, le stéarate de zinc, le stéarate d'aluminium, le stéarate de magnésium, et la cire de polyéthylène.

Les exemples de produits ignifuges sont les hydroxydes de métaux, les agents halogénés, l'oxyde d'antimoine, le décabromobiphényléther, et la bis(3,5-dibromo-4-bromopropyloxyphényl)sulfone.

Les quantités de ces autres additifs peuvent être choisies parmi les quantités appropriées qui n'affectent pas d'une façon défavorable les liants de l'invention. Par exemple, rapportées au poids total de la composition, les quantités appropriées sont d'environ 0,01 à 5% en poids pour les antioxydants; environ 0,01 à 5% en poids pour les absorbeurs d'ultra-violets; environ 0,01 à 1% en poids pour les agents antistatiques; environ 0,01 à 5% en poids pour les agents de nucléation; environ 0,1 à 60% en poids pour les charges; environ 0,01 à 1% en poids pour les agents de glissement ; et environ 0,1 à 50% en poids pour les produits ignifuges.

On peut obtenir la composition selon l'invention en mélangeant les différentes polyoléfines avec les additifs éventuels en utilisant les techniques connues de mélange des matériaux thermoplastiques, comme par exemple l'extrusion ou le malaxage. On peut utiliser des mélangeurs interne à pales ou à rotors, un mélangeur externe, des extrudeuses mono-vis, bi-vis co-rotatives ou contrarotatives. Préférentiellement, la température de l'outil de mise en oeuvre est comprise dans la gamme allant de 90 à 250°C, de manière toute préférée entre 120°C et 200°C.

Avantageusement, la composition finale a un MFI compris dans la gamme allant de 1 et 10 g/10min (190°C, 2,16kg).

On peut fabriquer des films de la composition de liant par les techniques connues de fabrication de film, comme par exemple d'extrusion à plat (encore appelée « extrusion cast ») ou d'extrusion soufflage de gaine. Préférentiellement, le film a une épaisseur allant de 0,05mm à 2 mm.

L'invention a pour objet une structure multicouche comprenant une couche de la composition selon l'invention sur au moins une couche support ; les couches en contact direct avec la couche de la composition selon l'invention sont appelées « couche support ».

La couche de la composition a préférentiellement une épaisseur allant de 0,05mm à 2 mm.

Selon un mode de réalisation, la couche de la composition selon l'invention est en contact avec une couche support comprenant une résine époxy. Avant application, cette résine époxy peut être sous forme de poudre. Préférentiellement cette couche a une épaisseur allant de 0,1 à 10 mm.

Selon un autre mode de réalisation, la couche de la composition selon l'invention est en contact avec une couche support comprenant une polyoléfine. Avantageusement, la polyoléfine est un polyéthylène. Préférentiellement, le polyéthylène a une densité supérieure ou égale à 0,92, de préférence comprise dans la gamme allant de 0,92 à 0,97, tout préférentiellement de 0,94 à 0,97.

Une structure particulièrement préférée combine ces deux derniers modes de réalisation, c'est à dire qu'il s'agit d'une structure comprenant successivement une première couche support comprenant une résine époxy, une couche de composition selon l'invention et une couche comprenant une polyoléfine, préférentiellement du polyéthylène. Préférentiellement cette couche a une épaisseur allant de 1 à 50 mm.

Ces structures peuvent être utilisées pour la protection à la corrosion de tubes métalliques ou pour la fabrication de gazoducs ou d'oléoducs.

Un autre objet de l'invention est un tube comprenant la structure selon l'invention. Le tube est de préférence en métal. De manière toute préférée, le tube selon l'invention comprend les couches successives suivantes : couche de métal/ couche comprenant une résine époxy/couche de liant selon l'invention/couche protectrice comprenant du polyéthylène, lesdites couches allant de l'intérieur vers l'extérieur du tube.

On peut utiliser les techniques connues de l'homme du métier pour fabriquer les tubes selon l'invention. On peut par exemple utiliser des techniques de co-extrusion. Lorsque le centre du tube est en métal, on peut par exemple utiliser ce procédé préféré de fabrication du tube :
- chauffer le tube métallique, par exemple dans la gamme allant de 150 et 250°C° ;
- appliquer la composition comprenant la résine époxy sous forme de poudre sur le tube, la résine époxy passant alors à l'état fondu ;
- appliquer dans un second temps sur la résine époxy à l'état fondu un film de la composition de liant ;
- recouvrir dans un troisième temps le film fondu de la composition de liant par la composition comprenant du polyéthylène à l'état fondu.

Le tube selon l'invention peut être avantageusement utilisé pour transporter des gaz ou des liquides, tout particulièrement des produits pétroliers ou des gaz.

La présente invention va être maintenant illustrée par des exemples particuliers de réalisation décrits ci-après. Il est précisé que ces exemples ne visent en aucun cas à limiter la portée de la présente invention.

### EXEMPLES

Pour réaliser des exemples de la composition selon l'invention et évaluer ses avantages par rapport aux compositions de l'art antérieur, les produits suivants ont été utilisés :

### MELANGE COGREFFE (A) : PREPARATION

Les polymères compris dans (A) sont un mélange de PEBDL obtenu par catalyse metallocene (A1) ayant une densité de 0,934 avec du PEBDL obtenu par catalyse Ziegler-Natta (A2) ayant une densité de 0,920, en proportion massiques respectives 70/30. Pour réaliser le mélange de polymère co-greffé, on a utilisé le protocole suivant : On effectue de manière préalable un mélange en sac de (A1) et (A2). On introduit ensuite ce mélange dans une extrudeuse co-rotative comprenant 8 zones de chauffe et ayant le profil de température suivant (de la trémie d'alimentation jusqu'à la tête de l'extrudeuse) : 190°C/190°C/210°C/240°C/250°C/250°C/230°C/230 °C. On introduit dans la seconde zone l'anhydride maléique (1,5% en masse par rapport à la masse des polymères introduits) ainsi qu'un initiateur de radicaux à base de 2,5-Di(t-butylperoxy)-2,5-dimethyl hexane (Luperox^{®} 101). On obtient en sortie d'extrudeuse le mélange co-greffé par de l'anhydride maléique.

### POLYETHYLENE NON GREFFE (B)

**mPE M 3427** est un polyéthylène produit par Total Petrochemicals obtenu par catalyse métallocène ayant une densité de 0,934 et un MFI de 2,7 g/10min (ASTM D 1238, 2,16kg, 190°C).

### COMPOSE ELASTOMERIQUE (C)

**ENGAGE^{®} EG 8200G** est un polyéthylène très basse densité produit par DOW ayant un module de flexion de 28 MPa (ISO 178 : 2001) et une densité de 0,882.

**LOTRYL^{®} 30BA02** est un copolymère éthylène-acrylate de butyle produit par Arkema ayant un module de flexion de 9 MPa (ISO 178 : 2001).

Les compositions selon l'invention (EX1, EX2 et EX3) et comparative (CP1 et CP2) ainsi que leurs proportions massiques sont reportées Tableau 1 :

**Tableau 1**

| | EX1 | EX2 | CP1 | CP2 |
|---|---|---|---|---|
| COGREFFE (A) | 25 | 25 | 25 | 80 |
| mPE M 3427 | 55 | 55 | 75 | |
| ENGAGE^{®} EG 8200G | | 20 | | |
| LOTRYL^{®} 30BA02 | 20 | | | 20 |

Un exemple comparatif 3 (CP3) a également été réalisé en cogreffant un mélange de 80% de mPE M 3427 et de 20% LOTRYL^{®} 30BA02 dans les mêmes conditions que pour la fabrication du mélange cogreffé (A).

Pour réaliser les films des formulations selon l'invention et comparatives, on effectue de manière préalable un mélange en sac des différents constituants (A), (B) et/ou (C) de la formulation. On introduit ensuite ce mélange des constituants dans une extrudeuse co-rotative comprenant 8 zones de chauffe et ayant le profil de température suivant (de la trémie d'alimentation jusqu'à la tête de l'extrudeuse) : 190°C/190°C/210°C/240°C/250°C/250°C/230°C/230°C. La vitesse de rotation des vis est réglée à 250 tours par minute pour un débit de 20kg/h. En sortie d'extrudeuse se trouve une filière plate permettant la formation d'un film de la composition

On chauffe à 195°C un tube d'acier. On applique sur ce tube une résine époxy (Eurokote 714.4) en la pulvérisant. La résine, qui prend la forme d'un gel, est recouverte 25 secondes après par laminage du film extrudé de la composition adhésive préalablement obtenu. On applique immédiatement une couche de 3mm d'épaisseur de polyéthylène haute densité 4206B (Total Petrochemicals) par laminage sur le liant qui est encore à l'état fondu.

Le tube est ensuite refroidi par de l'eau à température ambiante.

Les résultats concernant l'adhérence sont reportés Tableau 2. Pour mesurer l'adhérence de la résine époxy et de la couche de PE, on fait dans une première étape l'amorçage en détachant une languette à l'aide d'un couteau à température ambiante on reporte le terme « OK » dans la colonne « amorçage T ambiante » du Tableau 2 dans le cas où l'amorçage à température ambiante est possible. Si l'amorçage est impossible à température ambiante, on chauffe préalablement le tube avant de détacher la languette ; on reporte le terme « échec » dans la ligne « amorçage T ambiante » du Tableau 2 dans le cas où l'amorçage à température ambiante est impossible.

Lorsque la languette est décollée, on place l'éprouvette dans une enceinte thermique régulée et on applique le protocole de la norme NF A 49-710 pour mesurer les forces de pelage. Les tests sont réalisés à 23°C et 80°C ; les résultats obtenus sont également reportés Tableau 2.

**Tableau 2**

| | EX1 | EX2 | CP1 | CP2 | CP3 |
|---|---|---|---|---|---|
| amorçage T ambiante | OK | OK | Echec | OK | OK |
| F pelage 23°C | 371 | 295 | 271 | 159 | 180 |
| F pelage 80°C | 169 | 124 | 160 | Non mesuré | 70 |

Les liants selon l'invention ont une excellente adhérence aussi bien à température ambiante qu'à haute température. EX1 et CP2 montrent que l'adhérence est améliorée à température ambiante, lorsque l'on remplace une partie du polymère (A) greffé par un polyéthylène (B) non greffé, dans les proportions de la composition selon l'invention.

## Revendications

1. Composition comprenant par rapport à sa masse totale :
• de 1 à 40% d'un polyéthylène (A) greffé par un monomère fonctionnel ou un mélange d'un polyéthylène (A1) avec un second polymère (A2) différent de (A1), ce mélange de (A1) et (A2) étant co-greffé par un monomère fonctionnel insaturé, la teneur en masse de monomère fonctionnel insaturé par rapport à (A) étant comprise dans la gamme allant de 30 à 100000 ppm ;
• de 25 à 98% d'un polyéthylène (B) non greffé obtenu par catalyse métallocène ayant une densité allant de 0,925 (borne exclue) à 0,965 (borne inclue) ;
• de 1 à 35% d'un produit élastomérique (C).

2. Composition selon la revendication 1 **caractérisée en ce qu'**elle comprend, par rapport sa masse totale, de 10 à 30% en masse du polyéthylène greffé ou du mélange cogreffé (A), de 40 à 80% du polyéthylène non greffé (B) et de 10 à 30% en masse du produit élastomérique (C).

3. Composition selon l'une des revendications 1 à 2 dans laquelle la densité du polyéthylène (B) est comprise entre 0,925 et 0,940.

4. Composition selon l'une des revendications 1 à 3 dans laquelle le monomère fonctionnel greffé sur le polyéthylène ou sur le mélange (A) est un acide carboxylique insaturé ou un anhydride insaturé de cet acide.

5. Composition selon l'une des revendications 1 à 4 dans laquelle (A2) est une polyoléfine.

6. Composition selon la revendication 5 dans laquelle la polyoléfine (A2) est un polyéthylène différent de (A1).

7. Composition selon la revendication 6 **caractérisée en ce que** (A) est un mélange cogreffé de (A1) et (A2) et que ce mélange comprend de 80 à 20 parties d'un polyéthylène obtenu par catalyse métallocène (A1) de densité comprise dans la gamme allant de 0,865 à 0,950 et de 20 à 80 parties d'un polyéthylène basse densité linéaire (A2) obtenu par catalyse Ziegler-Natta ayant une densité comprise dans la gamme allant de 0,900 à 0,940 g/cm³.

8. Composition selon l'une des revendications 1 à 7 dans laquelle (C) a un module de flexion inférieur à 100MPa, ce module étant mesuré selon la norme ISO 178 : 2001.

9. Composition selon l'une des revendications 1 à 8 dans laquelle (C) est choisi parmi les copolymères éthylène - (méth)acrylate d'alkyle ou terpolymères éthylène (méth)acrylates d'alkyle - anhydride maléïque.

10. Composition selon l'une des revendications 1 à 9 dans laquelle (C) est un est un copolymère de l'éthylène avec une alpha-oléfine dont la densité est dans la gamme allant de 0,860 à 0,90.

11. Structure multicouche comprenant au moins une couche de composition (5) selon l'une des revendications 1 à 10 sur au moins une autre couche dite « couche support » (3,7).

12. Structure selon la revendication 11 dans laquelle la couche de la composition (5) est comprise entre une première couche support comprenant une résine époxy (3) et une seconde couche support comprenant du polyéthylène (7).

13. Utilisation d'une composition selon l'une des revendications 1 à 10 ou d'une structure selon la revendication 11 ou 12 dans des tubes.

14. Utilisation d'une structure selon la revendication 11 ou 12 pour la protection à la corrosion de tubes métalliques.

## Claims

1. Composition comprising, relative to its total weight:
• from 1 to 40% of a polyethylene (A) grafted with a functional monomer or a blend of a polyethylene (A1) with a second polymer (A2) different from (A1), said blend of (A1) and (A2) being co-grafted with an unsaturated functional monomer, the content by weight of unsaturated functional monomer relative to (A) being in the range from 30 to 100000 ppm;
• from 25 to 98% of a non-grafted polyethylene (B) obtained by metallocene catalysis having a density in the range from 0,925 (limit excluded) to 0,965 (limit included);
• from 1 to 35% of an elastomeric product (C).

2. Composition according to Claim 1, **characterized in that** it comprises, relative to its total weight, from 10 to 30 wt.% of the grafted polyethylene or of the co-grafted blend (A), from 40 to 80% of the non-grafted polyethylene (B) and from 10 to 30 wt.% of the elastomeric product (C).

3. Composition according to one of Claims 1 to 2, in which the density of polyethylene (B) is between 0,925 and 0,940.

4. Composition according to one of Claims 1 to 3, in which the functional monomer grafted on the polyethylene or on the mixture (A) is an unsaturated carboxylic acid or an unsaturated anhydride of said acid.

5. Composition according to one of Claims 1 to 4, in which (A2) is a polyolefin.

6. Composition according to Claim 5, in which polyolefin (A2) is a polyethylene different from (A1).

7. Composition according to Claim 6, **characterized in that** (A) is a co-grafted blend of (A1) and (A2) and **in that** this blend comprises from 80 to 20 parts of a polyethylene obtained by metallocene catalysis (A1) with a density in the range from 0.865 to 0.950 and from 20 to 80 parts of a linear low-density polyethylene (A2) obtained by Ziegler-Natta catalysis having a density in the range from 0.900 to 0.940 g/cm³.

8. Composition according to one of Claims 1 to 7, in which (C) has a flexural modulus below 100 MPa, said modulus being measured according to standard ISO 178:2001.

9. Composition according to one of Claims 1 to 8, in which (C) is selected from the ethylene - alkyl (meth)acrylate copolymers or ethylene alkyl (meth)acrylates - maleic anhydride terpolymers.

10. Composition according to one of Claims 1 to 8, in which (C) is a copolymer of ethylene with an alpha-olefin whose density is in the range from 0.860 to 0.90.

11. Multilayer structure comprising at least one layer of composition (5) according to one of Claims 1 to 10 on at least one other layer called "substrate layer" (3, 7).

12. Structure according to Claim 11, in which the layer of composition (5) is interposed between a first substrate layer comprising an epoxy resin (3) and a second substrate layer comprising polyethylene (7).

13. Use of a composition according to one of Claims 1 to 10 or of a structure according to Claim 11 or 12 in tubes.

14. Use of a structure according to Claim 11 or 12 for the corrosion protection of metal tubes.

## Patentansprüche

1. Zusammensetzung, umfassend, bezogen auf ihr Gesamtgewicht:
• 1 bis 40% eines mit einem funktionellen Monomer gepfropften Polyethylens (A) oder einer Mischung eines Polyethylens (A1) mit einem zweiten Polymer (A2), das von (A1) verschieden ist, wobei diese Mischung von (A1) und (A2) mit einem ungesättigten funktionellen Monomer cogepfropft ist, wobei der gewichtsbezogene Gehalt an ungesättigtem funktionellem Monomer, bezogen auf (A), im Bereich von 30 bis 100.000 ppm liegt;
• 25 bis 98% eines durch Metallocenkatalyse erhaltenen ungepfropften Polyethylens (B) mit einer Dichte von 0,925 (Grenzwert ausgeschlossen) bis 0,965 (Grenzwert eingeschlossen);
• 1 bis 35% eines elastomeren Produkts (C).

2. Zusammensetzung nach Anspruch 1, **dadurch gekennzeichnet, dass** sie, bezogen auf ihr Gesamtgewicht, 10 bis 30 Gew.-% des gepfropften Polyethylens bzw. der cogepfropften Mischung (A), 40 bis 80% des ungepfropften Polyethylens (B) und 10 bis 30 Gew.-% des elastomeren Produkts (C) umfasst.

3. Zusammensetzung nach einem der Ansprüche 1 bis 2, wobei die Dichte des Polyethylens (B) zwischen 0,925 und 0,940 liegt.

4. Zusammensetzung nach einem der Ansprüche 1 bis 3, wobei es sich bei dem auf das Polyethylen bzw. auf die Mischung (A) aufgepfropften funktionellen Monomer um eine ungesättigte Carbonsäure oder ein ungesättigtes Anhydrid dieser Säure handelt.

5. Zusammensetzung nach einem der Ansprüche 1 bis 4, wobei es sich bei (A2) um ein Polyolefin handelt.

6. Zusammensetzung nach Anspruch 5, wobei es sich bei dem Polyolefin (A2) um ein von (A1) verschiedenes Polyethylen handelt.

7. Zusammensetzung nach Anspruch 6, **dadurch gekennzeichnet, dass** es sich bei (A) um eine cogepfropfte Mischung von (A1) und (A2) handelt und die Mischung 80 bis 20 Teile eines durch Metallocenkatalyse erhaltenen Polyethylens (A1) mit einer Dichte im Bereich von 0,865 bis 0,950 und 20 bis 80 Teile eines durch Ziegler-Natta-Katalyse erhaltenen linearen Polyethylens niederer Dichte (A2) mit einer Dichte im Bereich von 0, 900 bis 0,940 g/cm³ umfasst.

8. Zusammensetzung nach einem der Ansprüche 1 bis 7, wobei (C) einen Biegemodul von weniger als 100 MPa aufweist, wobei dieser Modul gemäß ISO-Norm 178 : 2001 gemessen wird.

9. Zusammensetzung nach einem der Ansprüche 1 bis 8, wobei (C) aus Ethylen-Alkyl (meth) acrylat-Copolymeren oder Ethylen-Alkyl(meth)acrylat-Maleinsäureanhydrid-Terpolymeren ausgewählt ist.

10. Zusammensetzung nach einem der Ansprüche 1 bis 9, wobei es sich bei (C) um ein Copolymer von Ethylen mit einem alpha-Olefin, dessen Dichte im Bereich von 0,860 bis 0,90 liegt, handelt.

11. Mehrschichtstruktur, umfassend mindestens eine Schicht aus der Zusammensetzung (5) nach einem der Ansprüche 1 bis 10 auf mindestens einer anderen Schicht, die als "Trägerschicht" (3,7) bezeichnet wird.

12. Struktur nach Anspruch 11, wobei sich die Schicht aus der Zusammensetzung (5) zwischen einer ersten Trägerschicht (3), die ein Epoxidharz umfasst, und einer zweiten Trägerschicht (7), die Polyethylen umfasst, befindet.

13. Verwendung einer Zusammensetzung nach einem der Ansprüche 1 bis 10 oder einer Struktur nach Anspruch 11 oder 12 in Rohren.

14. Verwendung einer Struktur nach Anspruch 11 oder 12 zum Schutz von Metallrohren vor Korrosion.
